# EUROPEAN PATENT SPECIFICATION

(11) **EP 2 679 558 B1**
(45) Date of publication and mention of the grant of the patent: **19.06.2019**
(21) Application number: 12749450.8
(22) Date of filing: 23.02.2012
(51) Int. Cl.: B32B 17/10, C03C 27/12, B32B 27/18, B32B 27/30, C08K 3/22

(54) **INTERMEDIATE FILM FOR LAMINATED GLASSES, AND LAMINATED GLASS**
ZWISCHENFOLIE FÜR VERBUNDGLÄSER UND VERBUNDGLAS
FILM INTERMÉDIAIRE POUR VERRES FEUILLETÉS, ET VERRE FEUILLETÉ ASSOCIÉ

(30) Priority: 23.02.2011 JP 2011037630
(43) Date of publication of application: 01.01.2014
(73) Proprietor: Sekisui Chemical Co., Ltd., Osaka 530-8565 (JP)
(72) Inventor: KITANO, Hirofumi, Kouka-shi, Shiga 528-8585 (JP); FUKATANI, Juichi, Kouka-shi, Shiga 528-8585 (JP); II, Daizou, Kouka-shi, Shiga 528-8585 (JP); OKABAYASHI, Takazumi, Mishima-gun, Osaka 618-0021 (JP); TSUNODA, Ryuta, Kouka-shi, Shiga 528-8585 (JP)
(74) Representative: Ter Meer Steinmeister & Partner
(86) International application number: PCT/JP2012/054438
(87) International publication number: WO 2012/115198

(56) References cited:
- WO-A1-2010/101211
- JP-A- 2008 194 563
- JP-A- 2010 017 854
- JP-A- 2010 099 979
- JP-A- 2010 228 959
- JP-A- 2010 274 585
- JP-A- 2010 275 160
- JP-A- 2011 042 552
- JP-A- 2012 025 645
- US-A1- 2006 008 640
- US-A1- 2006 251 996
- US-A1- 2010 219 654
- US-A1- 2010 220 388

## Description

### TECHNICAL FIELD

The present invention relates to an interlayer film for laminated glass which is used for laminated glass for vehicles, and buildings, or the like. More specifically, the present invention relates to an interlayer film for laminated glass which can give high heat-shielding properties to laminated glass, and laminated glass including the interlayer film for laminated glass.

### BACKGROUND ART

Laminated glass is safety glass which, even when broken by impact from the outside, shatters into few flying glass fragments. For this reason, laminated glass is widely used for applications such as cars, rail cars, aircrafts, boats, ships, buildings, and the like. The laminated glass is produced by sandwiching an interlayer film for laminated glass between a pair of glass plates. Such laminated glass used for openings of vehicles or buildings are required to have high heat-shielding properties.

Infrared rays having a wavelength of 780 nm or longer, which is longer than a wavelength of visible light, have a small amount of energy compared to ultraviolet rays. The infrared rays, however, have a large thermal effect, and are emitted as heat when absorbed by a substance. For this reason, the infrared rays are commonly referred to as heat rays. Laminated glass is therefore required to sufficiently shield infrared rays so as to have better heat-shielding properties.

The following Patent Document 1 discloses an interlayer film containing tin-doped indium oxide particles (ITO particles) or antimony-doped tin oxide particles (ATO particles) as an interlayer film that effective block of the infrared rays (heat rays). The following Patent Document 2 discloses an interlayer film containing tungsten oxide particles.

The following Patent Document 3 discloses an interlayer film containing a near-infrared absorbing coloring matter, an ultraviolet absorber having a maximum absorption wavelength in the wavelength range of 250 to 400 nm, and an ethylene-vinyl acetate copolymer. Examples of the near-infrared absorbing coloring matter include phthalocyanine compounds, naphthalocyanine compounds, aminium salt compounds, and anthraquinone compounds.

### Related Art Document

### Patent Document

Patent Document 1: WO 2001/025162 A1
Patent Document 2: WO 2005/087680 A1
Patent Document 3: JP H07(1995)-178861 A

### SUMMARY OF THE INVENTION

### PROBLEMS TO BE SOLVED BY THE INVENTION

Laminated glass including an interlayer film that contains heat-shielding particles such as ITO particles, ATO particles, or tungsten oxide particles has been required to have both high heat-shielding properties and a high visible transmittance. That is, laminated glass is required to have high heat-shielding properties while retaining a high visible transmittance. Further, long-term retention of the high visible transmittance is required.

However, the conventional laminated glass disclosed in Patent Documents 1 and 2 may not have high heat-shielding properties together with a high visible transmittance. Further, the visible transmittance of laminated glass may be reduced with use. Particularly, long-time use of laminated glass including an interlayer film that contains tungsten oxide particles causes a remarkable reduction in a visible transmittance of the laminated glass.

It is also difficult to sufficiently increase the heat-shielding properties of laminated glass in cases where at least one of a phthalocyanine infrared absorber and an ultraviolet absorber is used as described in Patent Document 3.

The present invention aims to provide an interlayer film for laminated glass which has high heat-shielding properties and a high visible transmittance, and further has excellent light resistance, resulting in long-term retention of the high visible transmittance; and laminated glass including the interlayer film for laminated glass.

### MEANS FOR SOLVING THE PROBLEMS

According to a broad aspect of the present invention, the present invention provides an interlayer film for laminated glass having a laminated structure of two or more layers, comprising: a first layer that contains a polyvinyl acetal resin as a thermoplastic resin, a plasticizer and tungsten oxide particles, and a second layer that contains a polyvinyl acetal resin as a thermoplastic resin, a plasticizer, an ultraviolet shielding agent and that is disposed on a first surface side of the first layer,
wherein the amount of the tungsten oxide particles in 100% by weight of the first layer is 3% by weight or less, the amount of the ultraviolet shielding agent in 100% by weight of the second layer is 0.2% by weight or more and the ultraviolet shielding agent is a benzotriazol ultraviolet shielding agent, a benzophenone ultraviolet shielding agent, a triazine ultraviolet shielding agent, a benzoate ultraviolet shielding agent, a malonic ester ultraviolet shielding agent, or an oxalic anilide ultraviolet shielding agent.

According to another specific aspect of the interlayer film for laminated glass of the present invention, the ratio of the thickness of the second layer to the total thickness of the interlayer film is 0.1 or more and 0.9 or less.

According to another specific aspect of the interlayer film for laminated glass of the present invention, the tungsten oxide particles are cesium-doped tungsten oxide particles.

According to another specific aspect of the interlayer film for laminated glass of the present invention, the ultraviolet shielding agent is a benzotriazol ultraviolet shielding agent or a benzophenone ultraviolet shielding agent.

The laminated glass of the present invention comprises: a first component for laminated glass; a second component for laminated glass; and an interlayer film sandwiched between the first component for laminated glass and the second component for laminated glass, wherein the interlayer film is the interlayer film for laminated glass composed according to the present invention.

### EFFECT OF THE INVENTION

The interlayer film for laminated glass of the present invention includes the first layer that contains a polyvinyl acetal resin as a thermoplastic resin, a plasticizer and tungsten oxide particles. Therefore, the heat-shielding properties and the visible transmittance increases. Further, the multi-layer interlayer film for laminated glass further comprises a second layer that contains an ultraviolet shielding agent, a polyvinyl acetal resin as a thermoplastic resin, a plasticizer and that is disposed on a first surface side of the first layer. Therefore, the light resistance of the interlayer film increases, resulting in long-term retention of the high visible transmittance.

Therefore, use of the interlayer film for laminated glass of the present invention provides laminated glass which has high heat-shielding properties and a high visible transmittance and allows long-term retention of a high visible transmittance.

### BRIEF DESCRIPTION OF DRAWINGS

Fig. 1 is a partially cut cross-sectional view schematically showing an interlayer film for laminated glass according to one embodiment of the present invention.
Fig. 2 is a partially cut cross-sectional view schematically showing an interlayer film for laminated glass according to another embodiment of the present invention.
Fig. 3 is a partially cut cross-sectional view schematically showing one example of laminated glass using the interlayer film for laminated glass shown in Fig. 1.

### MODE(S) FOR CARRYING OUT THE INVENTION

The following will describe specific embodiments and examples of the present invention referring to the drawings, and thereby clarify the present invention.

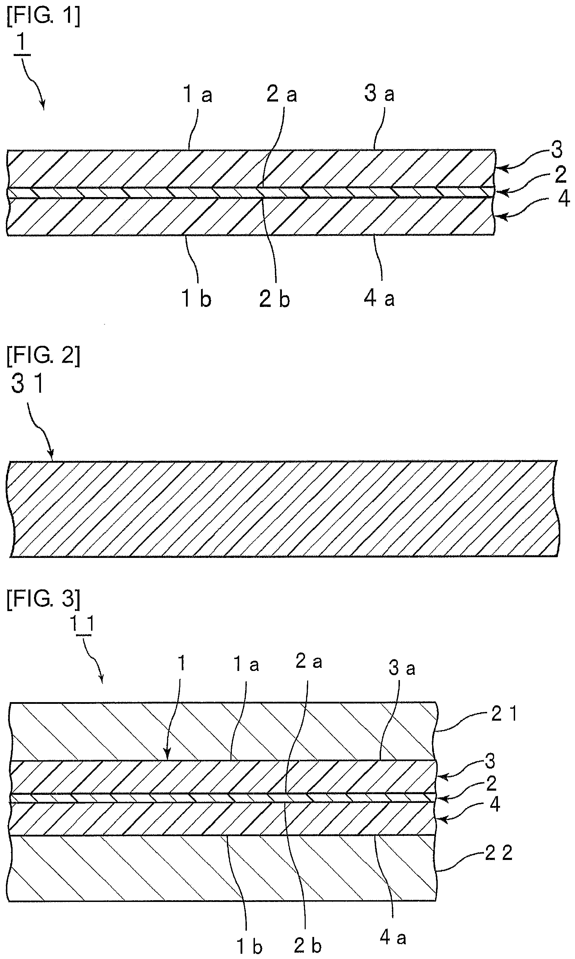

Fig. 1 shows a partially cut cross-sectional view schematically showing an interlayer film for laminated glass according to one embodiment of the present invention.

An interlayer film 1 shown in Fig. 1 is a multi-layer interlayer film having a laminated structure of two or more layers. The interlayer film 1 is used for obtaining laminated glass. The interlayer film 1 is an interlayer film for laminated glass. The interlayer film 1 comprises a first layer 2, a second layer 3 disposed on a first surface 2a side of the first layer 2, and a third layer 4 disposed on a second surface 2b side opposite to the first surface 2a of the first layer 2. The second layer 3 is laminated on the first surface 2a of the first layer 2. The third layer 4 is laminated on the second surface 2b of the first layer 2. The first layer 2 is an intermediate layer, and mainly functions as a layer for improving heat-shielding properties. The second layer 3 and the third layer 4 serve as protecting layers and adhesive layers, and are surface layers in the present embodiment. The first layer 2 is disposed between the second layer 3 and the third layer 4. The first layer 2 is sandwiched between the second layer 3 and the third layer 4. Thus, the interlayer film 1 has a multi-layer structure including layers laminated in the order of the second layer 3, the first layer 2, and the third layer 4.

Other layer(s) may be disposed between the first layer 2 and the second layer 3 and between the first layer 2 and the third layer 4. The first layer 2 and the second layer 3 are preferably directly laminated each other, and the first layer 2 and the third layer 4 are preferably directly laminated each other. Examples of other layer(s) include a layer containing a thermoplastic resin such as a polyvinyl acetal resin and a layer containing polyethylene terephthalate or the like.

The first layer 2 contains a thermoplastic resin, a plasticizer and tungsten oxide particles. The first layer 2 preferably contains an ultraviolet shielding agent.

The second layer 3 and the third layer 4 each contain an ultraviolet shielding agent. The second layer 3 also contains a thermoplastic resin and a plasticizer. The third layer 4 preferably contains a thermoplastic resin, and preferably contain a plasticizer. The composition of the second layer 3 and that of the third layer 4 may be the same as or different from each other.

Conventional laminated glass using an interlayer film has tended to have poor heat-shielding properties and high solar transmittance. Further, in conventional laminated glass, it has been difficult to produce laminated glass having both a lower solar transmittance and a higher visible transmittance.

One of the main features of the embodiment is that the first layer 2 contains a thermoplastic resin and tungsten oxide particles for sufficiently high heat-shielding properties and visible transmittance of the laminated glass. Tungsten oxide particles effectively increase the heat-shielding properties of the laminated glass. Further, use of the interlayer film 1 including the first layer 2 that contains a thermoplastic resin and tungsten oxide particles provides laminated glass with a low solar transmittance, which is an indicator of the heat-shielding properties, and further provides laminated glass with a high visible transmittance. Specifically, the laminated glass can be made to have a solar transmittance (Ts2500) of 65% or lower, and a visible transmittance of 65% or higher at the wave length of 300 to 2500 nm. Further, the solar transmittance (Ts2500) can be reduced to 50% or lower, and further the visible transmittance can increase to 70% or higher.

It was found that as a result of the examination by the present inventors, the visible transmittance of the laminated glass produced using only the interlayer film including the first layer that contains a thermoplastic resin and tungsten oxide particles is reduced with long-time use.

Therefore, the present inventors made further investigations, and found the configuration of an interlayer film and laminated glass in which a high visible transmittance can be retained for a long period of time.

Another main feature of the embodiment is that the interlayer film 1 includes the second layer 3 that contains an ultraviolet shielding agent and that is disposed on the first surface 2a side of the first layer 2 as well as the first layer 2 that contains a thermoplastic resin and tungsten oxide particles. Owing to such a feature, a reduction in the visible transmittance caused by a chemical change of the tungsten oxide particles contained in the interlayer film 1 can be suppressed. Therefore, the light resistance of the interlayer film 1 and the laminated glass is improved, resulting in long-term retention of the excellent visible transmittance.

In the interlayer film 1, the second layer 3 is laminated on the first surface 2a of the first layer 2, and the third layer 4 is laminated on the second surface 2b. The second layer is preferably disposed on a first surface side of the first layer, and the second layer is preferably laminated on the first surface of the first layer. The second layer is disposed on only the first surface side of the first layer, and no third layer may be disposed on the second surface side of the first layer. However, it is preferable that the second layer is disposed on the first surface side of the first layer, and the third layer is disposed on the second surface side of the first layer. The third layer is preferably laminated on the second surface of the first layer. The lamination of the third layer on the second surface of the first layer can further improve the penetration resistance of the laminated glass using the interlayer film 1. Further, the lamination of the third layer on the second surface of the first layer can further improve the handleability of the interlayer film 1.

Fig. 2 shows a partially cut cross-sectional view schematically showing an interlayer film for laminated glass according to a reference embodiment.

An interlayer film 31 shown in Fig. 2 is a single-layer interlayer film having a single-layer structure. The interlayer film 31 is a first layer. The interlayer film 31 is used for obtaining laminated glass. The interlayer film 31 is an interlayer film for laminated glass. The interlayer film 31 contains a thermoplastic resin, tungsten oxide particles, and an ultraviolet shielding agent.

The feature of the embodiment is that the first layer constituting the single-layer interlayer film 31 contains three components, i.e. a thermoplastic resin, tungsten oxide particles, and an ultraviolet shielding agent. Even if the single-layer interlayer film 31 contains a thermoplastic resin, tungsten oxide particles, and an ultraviolet shielding agent, the heat-shielding properties and the ultraviolet transmission of the interlayer film 31 and the laminated glass using the interlayer film 31 can be sufficiently increased. Specifically, the laminated glass can be made to have a solar transmittance (Ts2500) of 65% or lower, and a visible transmittance of 65% or higher at the wave length of 300 to 2500 nm. Further, the solar transmittance (Ts2500) can be reduced to 50% or lower, and further the visible transmittance can be increased to 70% or higher. Further, the light resistance of the interlayer film 31 and the laminated glass is increased, resulting in long-term retention of the excellent visible transmittance.

The laminated glass may be attached to openings of vehicles or buildings so that a light beam including heat rays firstly enters the second layer, not the first layer. Specifically, the laminated glass is attached to openings so that the second layer is located on the exterior space side of vehicles or buildings and the first layer is located on the interior space side of vehicles or buildings. Such a configuration effectively reduces the amount of ultraviolet rays that reach the first layer. In this case, the first layer or the third layer do not necessarily contain an ultraviolet shielding agent because a light beam firstly enters the second layer and thus can be prevented from firstly entering the first layer or the third layer.

Hereinafter, the first layer, the second layer and the third layer constituting the interlayer film for laminated glass of the present invention, and each of the components contained in the first layer, the second layer and the third layer are described in detail.

### (Thermoplastic resin)

The thermoplastic resin contained in the first layer and the second layer is a polyvinyl acetal resins. The third layer preferably contains a thermoplastic resin. The thermoplastic resin may be a conventionally known thermoplastic resin. One thermoplastic resin may be used alone, or two or more thermoplastic resins may be used in combination. The thermoplastic resins used in the first layer, the second layer and the third layer may be the same as or different from one another.

Examples of the thermoplastic resin contain polyvinyl acetal resins, ethylene-vinyl acetate copolymer resins, ethylene acrylic acid copolymer resins, polyurethane resins, and polyvinyl alcohol resins. Thermoplastic resins other than these may also be used.

The thermoplastic resin is preferably a polyvinyl acetal resin. Combination use of a polyvinyl acetal resin and a plasticizer further increases the adhesion of the film containing the thermoplastic resin to a component for laminated glass or other films.

The polyvinyl acetal resin can be produced by, for example, acetalizing a polyvinyl alcohol with an aldehyde. The polyvinyl alcohol can be produced by, for example, saponifying polyvinyl acetate. The saponification degree of the polyvinyl alcohol is typically in the range of 70 to 99.9 mol%, and preferably in the range of 80 to 99.8 mol%.

The average polymerization degree of the polyvinyl alcohol is preferably 200 or higher, more preferably 500 or higher, while it is preferably 3500 or lower, more preferably 3000 or lower, and still more preferably 2500 or lower. An average polymerization degree equal to or higher than the above lower limit further increases the penetration resistance of the laminated glass. An average polymerization degree equal to or lower than the above upper limit facilitates formation of the interlayer film.

The carbon number of the acetal group contained in the polyvinyl acetal resin is not particularly limited. The aldehyde used in production of the polyvinyl acetal resin is not particularly limited. The carbon number of the acetal group in the polyvinyl acetal resin is preferably 3 or 4. A carbon number of the acetal group in the polyvinyl acetal resin of 3 or greater sufficiently decreases the glass transition temperature of the interlayer film.

The aldehyde is not particularly limited. A C1-C10 aldehyde can be typically suitably used. Examples of the C1-C10 aldehyde include propionaldehyde, n-butyraldehyde, isobutyraldehyde, n-valeraldehyde, 2-ethylbutylaldehyde, n-hexyl aldehyde, n-octyl aldehyde, n-nonyl aldehyde, n-decyl aldehyde, formaldehyde, acetaldehyde, and benzaldehyde. Particularly, propionaldehyde, n-butyraldehyde, isobutyraldehyde, n-hexylaldehyde, and n-valeraldehyde are preferred, propionaldehyde, n-butyraldehyde, and isobutyraldehyde are more preferred, and n-butyraldehyde is still more preferred. Each of these aldehydes may be used alone, or two or more of these may be used in combination.

The hydroxyl group content (amount of hydroxyl groups) of the polyvinyl acetal resin is preferably 15 mol% or higher, more preferably 18 mol% or higher, and still more preferably 20 mol% or higher, while it is preferably 40 mol% or lower, more preferably 35 mol% or lower, and still more preferably 32 mol% or lower. A hydroxyl group content equal to or higher than the above lower limit further increases the adhesion of the interlayer film. A hydroxyl group content equal to or lower than the above upper limit increases the flexibility of the interlayer film, which allows easy handling of the interlayer film.

The hydroxyl group content of the polyvinyl acetal resin is a value of a mol fraction in percentage (mol%) which is obtained by division of the amount of ethylene groups bonded with hydroxyl groups by the total amount of ethylene groups of the main chain. The amount of ethylene groups bonded with hydroxyl groups, for example, is determined by measurement in conformity with JIS K6726 "Testing methods for polyvinyl alcohol".

The acetylation degree (amount of acetyl groups) of the polyvinyl acetal resin is preferably 0.1 mol% or higher, more preferably 0.3 mol% or higher, and still more preferably 0.5 mol% or higher, while it is preferably 30 mol% or lower, more preferably 25 mol% or lower, still more preferably 20 mol% or lower, and particularly preferably 15 mol% or lower. An acetylation degree equal to or higher than the above lower limit results in high compatibility between the polyvinyl acetal resin and the plasticizer. An acetylation degree equal to or lower than the above upper limit results in high moisture resistance of the interlayer film and laminated glass.

The acetylation degree is obtained below. The amount of ethylene groups bonded with the acetal group and the amount of the ethylene groups bonded with the hydroxyl group are subtracted from the total amount of ethylene groups in the main chain. The obtained value is divided by the total amount of ethylene groups in the main chain. The obtained mole fraction expressed as percentage is the acetylation degree. The amount of the ethylene groups bonded with acetal groups, for example, is determined by measurement in conformity with JIS K6728 "Testing methods for polyvinyl butyral".

The acetalization degree (butyralization degree in the case of a polyvinyl butyral resin) of the polyvinyl acetal resin is preferably 60 mol% or higher, and more preferably 63 mol% or higher, while it is preferably 85 mol% or lower, more preferably 75 mol% or lower, and still more preferably 70 mol% or lower. An acetalization degree equal to or higher than the lower limit results in high compatibility between the polyvinyl acetal resin and the plasticizer. An acetalization degree equal to or lower than the upper limit shortens the reaction time required to produce a polyvinyl acetal resin.

The acetalization degree is a mole percentage calculated from a mole fraction determined by dividing the amount of ethylene groups having an acetal group bonded thereto by the total amount of ethylene groups in the main chain.

The acetalization degree can be calculated by determining the acetylation degree and the hydroxyl group content in mole percentages using the methods based on JIS K 6728 "Testing Methods for Polyvinyl Butyral", and subtracting the acetylation degree and the hydroxyl group content from 100 mol%.

The hydroxyl group content (amount of hydroxyl groups), the acetalization degree (butyralization degree), and the acetylation degree are preferably calculated from the results obtained by the methods in accordance with JIS K 6728 "Testing Methods for Polyvinyl butyral". In cases where the polyvinyl acetal resin is a polyvinyl butyral resin, the hydroxyl group content (amount of hydroxyl groups), the acetalization degree (butyralization degree), and the acetylation degree can be calculated from the results obtained by the method in accordance with JIS K 6728 "Testing Methods for Polyvinyl butyral".

### (Plasticizer)

In terms of further increasing the adhesion of the interlayer film or the first layer, the first layer contains a thermoplastic resin and tungsten oxide particles as well as a plasticizer. In terms of further increasing the adhesion of the interlayer film or the second layer or the third layer, the second layer contain an ultraviolet shielding agent as well as a thermoplastic resin and a plasticizer. The third layer preferably contains an ultraviolet shielding agent as well as a thermoplastic resin and a plasticizer. The first layer, the second layer and the third layer particularly preferably contain a plasticizer in cases where the thermoplastic resins contained in the first layer, the second layer and the third layer are a polyvinyl acetal resin. The plasticizer is not particularly limited, and may be a conventionally known plasticizer. One plasticizer may be used alone, or two or more plasticizers may be used in combination. The thermoplastic resins used in the first layer, the second layer and the third layer may be the same as or different from one another.

Examples of the plasticizer include organic ester plasticizers such as monobasic organic acid esters and polybasic organic acid esters, and phosphoric acid plasticizers such as organic phosphoric acid plasticizers and organic phosphorous acid plasticizers. Particularly, organic ester plasticizers are preferred. The plasticizer is preferably a liquid plasticizer.

Examples of the monobasic organic acid esters include, but are not particularly limited to, glycol esters obtained by the reaction of a glycol with a monobasic organic acid, and esters of a monobasic organic acid and triethylene glycol or tripropylene glycol. Examples of the glycol include triethylene glycol, tetraethylene glycol, and tripropylene glycol. Examples of the monobasic organic acid include butyric acid, isobutyric acid, caproic acid, 2-ethylbutyric acid, heptylic acid, n-octylic acid, 2-ethylhexanoic acid, n-nonylic acid, and decylic acid.

Examples of the polybasic organic acid esters include, but are not particularly limited to, ester compounds of polybasic organic acids and C4-C8 linear or branched alcohols . Examples of the polybasic organic acid include adipic acid, sebacic acid, and azelaic acid.

Examples of the organic ester plasticizers include, but are not particularly limited to, triethylene glycol di-2-ethyl propanoate, triethylene glycol di-2-ethyl butyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctylazelate, dibutylcarbitol adipate, ethylene glycol di-2-ethyl butyrate, 1,3-propylene glycol di-2-ethyl butyrate, 1,4-butylene glycol di-2-ethyl butyrate, diethylene glycol di-2-ethyl butyrate, diethylene glycol di-2-ethylhexanoate, dipropylene glycol di-2-ethyl butyrate, triethylene glycol di-2-ethyl pentanoate, tetraethylene glycol di-2-ethyl butyrate, diethylene glycol dicaprylate, dihexyl adipate, dioctyl adipate, hexylcyclohexyl adipate, a mixture of heptyl adipate and nonyl adipate, diisononyl adipate, diisodecyl adipate, heptylnonyl adipate, dibutyl sebacate, oil-modified alkyd sebacate, and a mixture of a phosphoric acid ester and an adipic acid ester. Organic ester plasticizers other than these plasticizers may also be used.

Examples of the organic phosphoric acid plasticizer include, but are not particularly limited to, tributoxyethyl phosphate, isodecyl phenyl phosphate, and triisopropyl phosphate.

The plasticizer is preferably a diester plasticizer represented by the following formula (1).

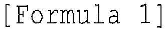

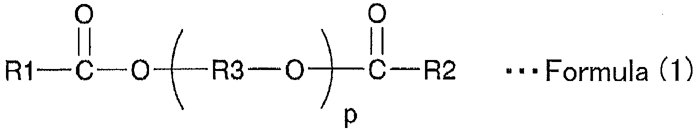

In the formula (1), R1 and R2 each represent a C2-C10 organic group, R3 represents an ethylene group, an isopropylene group, or an n-propylene group, and p represents an integer of 3 to 10. In the formula (1), R1 and R2 each are preferably a C5-C10 organic group, and more preferably a C6-C10 organic group.

The plasticizer preferably includes at least one selected from triethylene glycol di-2-ethylhexanoate (3GO), triethylene glycol di-2-ethylbutyrate (3GH), and triethylene glycol di-2-ethylpropanoate, more preferably at least one selected from triethylene glycol di-2-ethylhexanoate and triethylene glycol di-2-ethylbutyrate, and still more preferably triethylene glycol di-2-ethylhexanoate. The plasticizer still preferably includes triethylene glycol di-2-ethylpropanoate.

In the layer containing a thermoplastic resin and a plasticizer, for each 100 parts by weight of the thermoplastic resin, the amount of the plasticizer is preferably 25 parts by weight or more, more preferably 30 parts by weight or more, and still more preferably 35 parts by weight or more, while it is preferably 80 parts by weight or less, more preferably 75 parts by weight or less, and still more preferably 70 parts by weight or less. The amount of the plasticizer in each of the first layer, the second layer and the third layer is preferably in the range from the lower limit to the upper limit in cases where each of the first layer, the second layer and the third layer contains a thermoplastic resin and a plasticizer. An amount of the plasticizer equal to or more than the above lower limit further increases the penetration resistance of the laminated glass. An amount of the plasticizer equal to or less than the above upper limit further increases the transparency of the interlayer film.

### (Tungsten oxide particles)

The tungsten oxide particles contained in the first layer are heat-shielding particles. The second layer and the third layer may contain tungsten oxide particles.

The tungsten oxide particles are represented by the following formula (X1) or formula (X2). For the interlayer film for laminated glass of the present invention, tungsten oxide particles represented by the following formula (X1) or formula (X2) are suitably used.

W_{y}O_{z} ... Formula (X1)

In the above formula (X1), W represents tungsten, O represents oxygen, and y and z satisfy the relation 2.0 < z/y < 3.0.

MₓW_{y}O_{z} ... Formula (X2)

In the above formula (X2), M is at least one element selected from the group consisting of H, He, alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, and Re; W represents tungsten, O represents oxygen, and x, y, and z satisfy the relations 0.001 ≤ x/y ≤ 1 and 2.0 < z/y ≤ 3.0.

For a further increase in the heat-shielding properties of the interlayer film and the laminated glass, the tungsten oxide particles are preferably metal-doped tungsten oxide particles. The term "tungsten oxide particles" includes metal-doped tungsten oxide particles. Specific examples of the metal-doped tungsten oxide particles include sodium-doped tungsten oxide particles, cesium-doped tungsten oxide particles, thallium-doped tungsten oxide particles, and rubidium-doped tungsten oxide particles.

For a further increase in the heat-shielding properties of the interlayer film and the laminated glass, cesium-doped tungsten oxide particles are particularly preferred. For a further increase in the heat-shielding properties of the interlayer film and the laminated glass, the cesium-doped tungsten oxide particles are preferably tungsten oxide particles represented by the formula: Cs_{0.33}WO₃.

The average particle size of the tungsten oxide particles is preferably 0.01 µm or larger, and more preferably 0.02 µm or larger, while it is preferably 0.2 µm or smaller, more preferably 0.1 µm or smaller, and still more preferably 0.05 µm or smaller. An average particle size equal to or larger than the above lower limit leads to sufficiently high heat-ray shielding properties. An average particle size equal to or larger than the above upper limit leads to high dispersibility of the tungsten oxide particles.

The term "average particle size" means a volume-average particle size. The average particle size can be measured using a device such as a particle size distribution measuring device ("UPA-EX 150" product of Nikkiso Co., Ltd.).

The amount of the tungsten oxide particles in 100% by weight of the first layer is is 3% by weight or less. An amount of the tungsten oxide particles in the range from the lower limit to the upper limit can sufficiently improve the heat-shielding properties and sufficiently increase the visible transmittance. For example, such an amount can give a visible transmittance of 70% or higher. In cases where the second layer and the third layer contain tungsten oxide particles, the preferable lower limit and upper limit of the amount of the tungsten oxide particles in each of the second layer and the third layer are the same as those of the tungsten oxide particles in the first layer.

### (Ultraviolet shielding agent)

In the interlayer film for laminated glass of the present invention, the first layer contains an ultraviolet shielding agent or the second layer contains an ultraviolet shielding agent. Further, even in a multi-layer interlayer film for laminated glass including at least the first layer and the second layer, the first layer preferably contains an ultraviolet shielding agent. The third layer preferably contains an ultraviolet shielding agent. Use of an ultraviolet shielding agent prevents the visible transmittance from easily decreasing when the interlayer film and laminated glass are used for a long period of time. One ultraviolet shielding agent may be used alone, or two or more ultraviolet shielding agents may be used in combination.

The ultraviolet shielding agent contains an ultraviolet absorber. The ultraviolet shielding agent is preferably an ultraviolet absorber.

The ultraviolet shielding agent is a benzotriazol ultraviolet shielding agent (benzotriazol compound), a benzophenone ultraviolet shielding agent (benzophenone compound), a triazine ultraviolet shielding agent (triazine compound), a benzoate ultraviolet shielding agent (benzoate compound), a malonic ester ultraviolet shielding agent (malonic ester compound), or an oxalic anilide ultraviolet shielding agent (oxalic anilide compound).

The ultraviolet shielding agent is preferably not heat-shielding particles. The ultraviolet shielding agent is preferably a benzotriazol ultraviolet shielding agent, a benzophenone ultraviolet shielding agent, a triazine ultraviolet shielding agent, or a benzoate ultraviolet shielding agent, more preferably a benzotriazol ultraviolet shielding agent or a benzophenone ultraviolet shielding agent, and ,in particular, preferably a benzotriazol ultraviolet shielding agent. The ultraviolet shielding agent is preferably a benzotriazol ultraviolet absorber, a benzophenone ultraviolet absorber, a triazine ultraviolet absorber, or a benzoate ultraviolet absorber, more preferably a benzotriazol ultraviolet absorber or a benzophenone ultraviolet absorber, and still more preferably a benzotriazol ultraviolet absorber.

Examples of the benzotriazol ultraviolet shielding agent include 2-(2'-hydroxy-5'-methylphenyl)benzotriazol ("Tinuvin P" product of BASF A.G.), 2-(2'-hydroxy-3',5'-di-t-butylphenyl)benzotriazol ("Tinuvin 320" product of BASF A.G.), 2-(2'-hydroxy-3'-t-butyl-5-methylphenyl)-5-chlorobenzotriaz ole ("Tinuvin 326" product of BASF A.G.), and 2-(2'-hydroxy-3',5'-di-amylphenyl)benzotriazol ("Tinuvin 328" product of BASF A.G.). The ultraviolet shielding agent is preferably a benzotriazol ultraviolet shielding agent containing a halogen atom, and more preferably a benzotriazol ultraviolet shielding agent containing a chlorine atom because they show excellent performance of absorbing ultraviolet rays.

Examples of the benzophenone ultraviolet shielding agent include octabenzone ("Chimassorb 81" product of BASF A.G.) .

Examples of the triazine ultraviolet shielding agent include 2-(4,6-diphenyl-1,3,5-triazine-2-yl)-5-[(hexyl)oxy]-phenol ("Tinuvin 1577FF" product of BASF A.G.). Examples of commercially available products of the triazine ultraviolet shielding agent include "LA-F70" product of ADEKA CORPORATION.

Examples of the benzoate ultraviolet shielding agent include 2,4-di-tert-butylphenyl-3,5-di-tert-butyl-4-hydroxybenzoate ("Tinuvin 120" product of BASF A.G.).

Examples of the malonic ester ultraviolet shielding agent include malonic acid[(4-methoxyphenyl)-methylene]-dimethyl ester ("Hostavin PR-25" product of Clariant(Japan)K.K.).

Examples of the oxalic anilide ultraviolet shielding agent include 2-ethyl 2'-ethoxy-oxalanilide ("Sanduvor VSU" product of Clariant(Japan)K.K.).

For further suppression of a decrease in the visible transmittance of the interlayer film and laminated glass over time, the ultraviolet shielding agent is preferably 2-(2'-hydroxy-3'-t-butyl-5-methylphenyl)-5-chlorobenzotriaz ole ("Tinuvin 326" product of BASF A.G.) or 2-(2'-hydroxy-3',5'-di-amylphenyl)benzotriazol ("Tinuvin 328" product of BASF A.G.), and is more preferably 2-(2'-hydroxy-3'-t-butyl-5-methylphenyl)-5-chlorobenzotriaz ole.

The amount of the ultraviolet shielding agent is not particularly limited. In cases where the first layer contains an ultraviolet shielding agent, for further suppression of a decrease in the visible transmittance over time, the amount of the ultraviolet shielding agent in 100% by weight of the first layer is preferably 0.1% by weight or more, more preferably 0.2% by weight or more, still more preferably 0.3% by weight or more, and particularly preferably 0.5% by weight or more, while it is preferably 2.5% by weight or less, more preferably 2% by weight or less, still more preferably 1% by weight or less, and particularly preferably 0.8% by weight or less. In the second layer, for further suppression of a decrease in the visible transmittance over time, the amount of the ultraviolet shielding agent in 100% by weight of the second layer is 0.2% by weight or more, preferably 0.3% by weight or more, and particularly preferably 0.5% by weight or more, while it is preferably 2.5% by weight or less, more preferably 2% by weight or less, still more preferably 1% by weight or less, and particularly preferably 0.8% by weight or less. Particularly when the amount of the ultraviolet shielding agent in 100% by weight of the first layer is 0.2% by weight or more, or the amount of the ultraviolet shielding agent in 100% by weight of the second layer or the third layer is 0.2% by weight or more, a decrease in the visible transmittance of the interlayer film and the laminated glass over time can be notably suppressed.

### (Antioxidant)

The interlayer film for laminated glass of the present invention preferably contains an antioxidant. The first layer preferably contains an antioxidant, and each of the second layer and the third layer preferably contains an antioxidant. One antioxidant may be used alone, or two or more antioxidants may be used in combination.

Examples of the antioxidant include phenolic antioxidants, sulfuric antioxidants, and phosphoric antioxidants. The phenolic antioxidant is an antioxidant with a phenol skeleton. The sulfuric antioxidant is an antioxidant containing sulfur atom(s). The phosphoric antioxidant is an antioxidant containing phosphorus atom(s).

The antioxidant is preferably a phenolic antioxidant. Examples of the phenolic antioxidants include 2,6-di-t-butyl-p-cresol (BHT), butylated hydroxyanisole (BHA), 2,6-di-t-butyl-4-ethylphenol, stearyl-β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionat e]methane, 1,3,3-tris-(2-methyl-4-hydroxy-5-t-butylphenol)butane, 1,3,5-trimethyl-2,4,6-tris(3,5-di-t-butyl-4-hydroxybenzyl)b enzene, and bis (3,3'-t-butylphenol)butyric acid glycol ester. One or two or more of these antioxidants may be suitably used.

For further effective long-term retention of the high visible transmittance of the interlayer film and the laminated glass, the antioxidant is preferably a phenolic antioxidant or a phosphoric antioxidant.

Examples of commercially available products of the antioxidant include "IRGANOX 245" product of BASF A.G., "IRGAFOS 168" product of BASF A. G., "IRGAFOS 38" product of BASF A.G., "Sumilizer BHT" product of Sumitomo Chemical Co., Ltd., and "IRGANOX 1010" product of Ciba Geigy.

For long-term retention of the high visible transmittance of the interlayer film and laminated glass, the amount of the antioxidant in 100% by weight of the interlayer film is preferably 0.15% by weight or more. Meanwhile, the amount of the antioxidant in 100% by weight of the interlayer film is preferably 2% by weight or less, for prevention of saturation of the effect of adding an antioxidant. In order to retain a high visible transmittance of the interlayer film and the laminated glass over time, the amount of the antioxidant is preferably as large as possible.

For a further increase in the heat-shielding properties and visible transmittance of the interlayer film and the laminated glass and in the visible transmittance of the interlayer film and the laminated glass over time, the amount of the antioxidant in 100% by weight of the interlayer film is preferably 0.15% by weight or more, more preferably 0.2% by weight or more, still more preferably 0.75% by weight or more, and particularly preferably 0.8% by weight or more. For prevention of the discoloration of a surrounding portion due to the effect of the antioxidant, the amount of the antioxidant in 100% by weight of the interlayer film is preferably 2% by weight or less, more preferably 1.8% by weight or less, and still more preferably 1.5% by weight or less.

The interlayer film for laminated glass of the present invention preferably contains the tungsten oxide particles and the antioxidant in a weight ratio (tungsten oxide particles: antioxidant) of 10:1 to 1:100, and more preferably 5:1 to 1:50. A weight ratio of the tungsten oxide particles to the antioxidant in the above range enables a further increase in the heat-shielding properties and visible transmittance of the interlayer film and the laminated glass, and in the visible transmittance of the interlayer film and the laminated glass over time. The weight ratio means a ratio of the amount (% by weight) of the tungsten oxide particles in 100% by weight of the interlayer film to the amount (% by weight) of the antioxidant in 100% by weight of the interlayer film.

### (Other components)

The interlayer film for laminated glass of the present invention may optionally contain additives such as a light stabilizer, a fire retardant, an antistatic agent, a pigment, a dye, an adhesion adjuster, a moisture resistance agent, a fluorescent brightener, an infrared absorber, and a near-infrared absorbing coloring matter. Each of these additives may be used alone, or two or more of these may be used in combination.

The first layer preferably contains a near-infrared absorbing coloring matter. The second layer and the third layer may contain a near-infrared absorbing coloring matter. The first layer preferably contains a component X that is at least one component selected from a phthalocyanine compound, a naphthalocyanine compound, and an anthracocyanine compound. The second layer and the third layer may contain the component X. The component X is a near-infrared absorbing coloring matter and a heat-shielding component. Combination use of the tungsten oxide particles and the component X in the whole interlayer film enables sufficient blocking of the infrared rays (heat rays).

The amount of the near-infrared absorbing coloring matter (component X) in the first layer is not particularly limited. In 100% by weight of the first layer, the amount of the near-infrared absorbing coloring matter (component X) is preferably 0.001% by weight or more, more preferably 0.003% by weight or more, and still more preferably 0.005% by weight or more, while it is preferably 0.1% by weight or less, and more preferably 0.05% by weight or less. An amount of the near-infrared absorbing coloring matter (component X) in the first layer in the above range from the lower limit to the upper limit can sufficiently improve the heat-shielding properties, sufficiently decrease the solar transmittance (Ts2500), and sufficiently increase the visible transmittance. For example, the visible transmittance can increase to 70% or higher.

### (Interlayer film for laminated glass)

The thickness of the interlayer film for laminated glass of the present invention is not particularly limited. In terms of the practicality and a sufficient increase in the heat-shielding properties, the thickness of the interlayer film is preferably 0.1 mm or larger, and more preferably 0.25 mm or larger, while it is preferably 3 mm or smaller, and more preferably 1.5 mm or smaller. A thickness of the interlayer film equal to or larger than the lower limit provides high penetration resistance to the laminated glass.

The method of producing the interlayer film for laminated glass of the present invention is not particularly limited. The method of producing the interlayer film can be a conventionally known method. Examples of the method of producing the interlayer film include kneading the above components. A production method through extrusion molding is preferred because of suitability for continuous production.

Examples of the kneading method include, but are not particularly limited to, a method using an extruder, a plastograph, a kneader, a Banbury mixer, or a calender roll. Particularly, a production method using an extruder is preferred because of suitability for continuous production, and a method using a twin-screw extruder is more preferred. In the preparation of the interlayer film for laminated glass of the present invention, the first layer may be produced separately from the second layer and the third layer, and the first layer, the second layer and the third layer may be laminated to provide a multi-layer interlayer film, or the first layer, the second layer and the third layer may be laminated by co-extrusion to provide an interlayer film.

Further, the second layer and the third layer may be formed by applying a material containing an ultraviolet shielding agent on the surface of the first layer to provide an interlayer film.

Since the producibility of the interlayer film is excellent, the second layer and the third layer preferably contain the same polyvinyl acetal resin; the second layer and the third layer more preferably contain the same polyvinyl acetal resin and the same plasticizer; and the second layer and the third layer are still more preferably formed from the same resin composition.

In cases where the interlayer film for laminated glass is a multi-layer interlayer film for laminated glass including a laminated structure of two or more layers, the ratio of the thickness (µm) of the second layer to the total thickness (µm) of the interlayer film and the ratio of the thickness (µm) of the third layer to the total thickness (µm) of the interlayer film are preferably 0.1 or more, and more preferably 0.2 or more, while it is preferably 0.9 or less, more preferably 0.7 or less, and still more preferably 0.5 or less. Each of the thickness of the second layer and the thickness of the third layer is preferably 0.1T or larger, and more preferably 0.2T or larger, while it is preferably 0.9T or smaller, more preferably 0.7T or smaller, and still more preferably 0.5T or smaller, wherein T (µm) represents the thickness of the interlayer film for laminated glass. A thickness of the second layer equal to or larger than the lower limit and a thickness of the third layer equal to or larger than the lower limit lead to further effective long-term retention of the high visible transmittance of the laminated glass. Further, in cases where the interlayer film has a laminated structure of three layers of the first layer, the second layer and the third layer, the ratio of the total thickness (µm) of the thickness of the second layer and the thickness of the third layer to the total thickness (µm) of the interlayer film is preferably 0.5 or more, and more preferably 0.6 or more, while it is preferably 0.95 or less, and more preferably 0.9 or less. If the thickness ratio is equal to or less than the upper limit, the thickness of the laminated glass is reduced and the handleability of the interlayer film and the laminated glass is further improved.

### (Laminated glass)

Fig. 3 is a cross-sectional view illustrating a laminated glass including the interlayer film for laminated glass according to one embodiment of the present invention.

Laminated glass 11 illustrated in Fig. 3 is provided with an interlayer film 1, a first laminated component for laminated glass 21 and a second laminated component for laminated glass 22. The interlayer film 1 is sandwiched between the first laminated component for laminated glass 21 and the second laminated component for laminated glass 22. The first component for laminated glass 21 is laminated on a first surface 1a of the interlayer film 1. The second component for laminated glass 22 is laminated on a second surface 1b of the interlayer film 1 which is the opposite surface of the first surface 1a. The first component for laminated glass 21 is laminated on an outer surface 3a of the second layer 3. The second component for laminated glass 22 is laminated on an outer surface 4a of the third layer 4.

As described above, the laminated glass of the present invention includes the first component for laminated glass; the second component for laminated glass; and the interlayer film sandwiched between the first laminated component for laminated glass and the second laminated component for laminated glass. The interlayer film for laminated glass of the present invention is used as the above interlayer film.

Examples of the first laminated component for laminated glass and the second laminated component for laminated glass include glass plates and PET (polyethylene terephthalate) films. The laminated glass includes laminated glass with an interlayer film sandwiched between two glass plates as well as laminated glass with an interlayer film sandwiched between a glass plate and a PET film or the like. That is, the laminated glass is a laminate including a glass plate, and preferably includes at least one glass plate.

Examples of the glass plate include inorganic glass plates and organic glass plates. Examples of the inorganic glass include float plate glass, heat absorbing glass, heat rays reflecting plate glass, polished plate glass, molded plate glass, meshed plate glass, wired plate glass, clear glass, and green glass. The organic glass is synthetic resin glass that can be substituted for inorganic glass . Examples of the organic glass plate include a polycarbonate plate and a poly(meth)acrylic resin plate. Examples of the poly(meth)acrylic resin plate include a polymethyl(meth)acrylate plate.

The thickness of the component for laminated glass is not particularly limited, and is preferably 1 mm or larger, while it is preferably 5 mm or smaller, and more preferably 3 mm or smaller. In cases where the component for laminated glass is a glass plate, the thickness of the glass plate is preferably 1 mm or larger, while it is preferably 5 mm or smaller, and more preferably 3 mm or smaller. In cases where the component for laminated glass is a PET film, the thickness of the PET film is preferably 0.03 mm or larger, while it is preferably 0.5 mm or smaller.

The method of producing the laminated glass is not particularly limited. For example, an interlayer film or multi-layer interlayer film is sandwiched between the first laminated component for laminated glass and the second laminated component for laminated glass, and the resulting product is pressed by a pressing roll or vacuumed under reduced pressure in a rubber bag so that the air remaining between the first component for laminated glass, the second laminated component for laminated glass and the interlayer film is removed. Thereafter, the components are preliminarily adhered at about 70 to 110°C to obtain a laminate. Next, the laminate is placed in an autoclave or is pressed, so that the laminate is pressure-bonded at about 120 to 150°C under a pressure of 1 to 1.5 MPa. Thereby, laminated glass can be obtained.

The interlayer film and laminated glass can be used for cars, railcars, aircrafts, boats and ships, and buildings. The interlayer film and the laminated glass can also be used for other uses. The interlayer film and laminated glass are preferably laminated glass for vehicles or buildings, and more preferably laminated glass for vehicles. The interlayer film and the laminated glass can be used for windshields, side glass, rear glass, roof glass, or the like of cars. Since the interlayer film and the laminated glass have high heat-shielding properties and a high visible transmittance, they are suitable for cars.

In terms of obtaining laminated glass further excellent in transparency, the visible transmittance of the laminated glass is preferably 65% or higher and more preferably 70% or higher. The visible transmittance of the laminated glass can be determined in accordance with JIS R 3211 (1998). The laminated glass including two green glass plates with a thickness of 2 mm, which is in accordance with JIS R 3208, and the interlayer film for laminated glass of the present invention sandwiched between the glass plates preferably has a visible transmittance of 65% or higher, and more preferably has a visible transmittance of 70% or higher.

The solar transmittance (Ts2500) of the laminated glass is preferably 65% or lower and more preferably 50% or lower. The solar transmittance of the laminated glass is measured in accordance with JIS R 3106 (1998). The laminated glass including two green glass plates with a thickness of 2 mm, which is in accordance with JIS R 3208, and the interlayer film for laminated glass of the present invention sandwiched between the glass plates preferably has a solar transmittance of 65% or lower, more preferably 60% or lower, and still more preferably 50% or lower.

The haze value of the laminated glass is preferably 2% or lower, more preferably 1% or lower, still more preferably 0.5% or lower, and particularly preferably 0.4% or lower. The haze value of the laminated glass is measured in accordance with JIS K 6714.

Hereinafter, the present invention will be described in more detail based on examples.

The following materials were used in the examples and comparative examples.

Thermoplastic resin:
"PVB1" (polyvinyl butyral resin acetalized with n-butyraldehyde, average polymerization degree: 1700, hydroxyl group content: 30.5 mol%, acetylation degree: 1 mol%, butyralization degree: 68.5 mol%)
"PVB2" (polyvinyl butyral resin acetalized with n-butyraldehyde, average polymerization degree: 2300, hydroxyl group content: 22 mol%, acetylation degree: 13 mol%, butyralization degree: 65 mol%)
"PVB3" (polyvinyl butyral resin acetalized with n-butyraldehyde, average polymerization degree: 2400, hydroxyl group content: 19.5 mol%, acetylation degree: 1.5 mol%, butyralization degree: 79 mol%)

Plasticizer:
Plasticizer 1: triethylene glycol di-2-ethylhexanoate (3GO)
Plasticizer 2: triethylene glycol di-2-ethylpropanoate Tungsten oxide particles (heat-shielding particles): cesium-doped tungsten oxide particles (Cs_{0.33}WO₃)

Ultraviolet shielding agent:
Ultraviolet shielding agent 1 (2-(2'-hydroxy-3'-t-butyl-5-methylphenyl)-5-chlorobenzotria zole, "Tinuvin 326" product of BASF A.G.)
Ultraviolet shielding agent 2 (2-(2'-hydroxy-3',5'-di-amylphenyl)benzotriazol, "Tinuvin 328" product of BASF A.G.)
Ultraviolet shielding agent 3 (2-ethyl-2'-ethoxy-oxalanilide, "Sanduvor VSU" product of Clariant(Japan)K.K.)
Ultraviolet shielding agent 4 (malonic acid[(4-methoxyphenyl)-methylene]-dimethyl ester, "Hostavin PR-25" product of Clariant(Japan)K.K.).
Ultraviolet shielding agent 5 (triazine ultraviolet shielding agent, "LA-F70" product of ADEKA CORPORATION)

### Antioxidant:

### Antioxidant (2,6-di-t-butyl-p-cresol (BHT))

Near-infrared absorbing coloring matter ("NIR-43V" product of YAMADA CHEMICAL Co., Ltd.)

### (Reference Example 1)

### (1) Production of interlayer film

Plasticizer 1 (triethylene glycol di-2-ethylhexanoate (3GO)) (40 parts by weight), tungsten oxide particles in an amount of 0.030% by weight in 100% by weight of the interlayer film to be obtained, an antioxidant (2,6-di-t-butyl-p-cresol (BHT)) in an amount of 0.80% by weight in 100% by weight of the interlayer film to be obtained, and ultraviolet shielding agent 1 ("Tinuvin 326" product of BASF) in an amount of 0.80% by weight in 100% by weight of the interlayer film to be obtained were mixed, and a phosphoric acid ester compound was also added to the mixture as a dispersant. The contents were mixed using a horizontal micro bead mill to provide a dispersion. The amount of the phosphoric acid ester compound was adjusted to be 1/10 of the amount of the tungsten oxide particles.

The whole amount of the dispersion was added to 100 parts by weight of the polyvinyl butyral resin (PVB1), and the contents were sufficiently kneaded using a mixing roll to provide a composition.

The resulting composition was sandwiched between two fluororesin sheets with a clearance plate (having the same thickness as the interlayer film to be obtained) interposed therebetween, and they were press-molded at 150°C for 30 minutes to provide a 760 µm-thick single-layer interlayer film.

### (2) Production of laminated glass

The resulting interlayer film was cut into a size of 30 cm in length × 30 cm in width. Two green glass plates based on JIS R 3208 (1998), (30 cm in length × 30 cm in width × 2 mm in thickness) were produced. The resulting interlayer film was sandwiched between these two green glass plates. The product was retained in a vacuum laminator at 90°C for 30 minutes and then vacuum-pressed, so that a laminate was obtained. The portion of the interlayer film protruding out of the glass plates was cut off, whereby laminated glass was obtained.

### (Reference Examples 2 to 7 and Comparative Examples 1 and 2)

A single-layer interlayer film was produced as in Reference Example 1, except that the types and amounts of the tungsten oxide particles (heat-shielding particles), the antioxidant, and the ultraviolet shielding agent were set to those shown in Table 1. A laminated glass including an interlayer film was produced as in Reference Example 1 using the resulting interlayer film. In Reference Example 7, no antioxidant was used. In Comparative Example 1, no tungsten oxide particles were used. In Comparative Example 2, no ultraviolet shielding agent was used.

### (Example 8)

### (1) Production of heat-shielding layer

Plasticizer 1 (triethylene glycol di-2-ethylhexanoate (3GO)) (60 parts by weight), tungsten oxide particles in an amount of 0.030% by weight in 100% by weight of the interlayer film to be obtained, and an antioxidant (2,6-di-t-butyl-p-cresol (BHT)) in an amount of 0.80% by weight in 100% by weight of the interlayer film to be obtained were mixed, and a phosphoric acid ester compound was also added to the mixture as a dispersant. The contents were mixed using a horizontal micro bead mill to provide a dispersion. The amount of the phosphoric acid ester compound was adjusted to be 1/10 of the amount of the tungsten oxide particles.

The whole amount of the dispersion was added to 100 parts by weight of the polyvinyl butyral resin (PVB2), and the contents were sufficiently kneaded using a mixing roll to provide a composition for a heat-shielding layer.

### (2) Production of ultraviolet shielding layer

Plasticizer 1 (triethylene glycol di-2-ethylhexanoate (3GO)) (40 parts by weight) and ultraviolet shielding agent 1 ("Tinuvin 326" product of BASF) in an amount of 0.80% by weight in 100% by weight of the ultraviolet shielding layer to be obtained were mixed using a horizontal micro bead mill to provide a dispersion.

The whole amount of the dispersion was added to 100 parts by weight of the polyvinyl butyral resin (PVB1), and the contents were sufficiently kneaded using a mixing roll to provide a composition for ultraviolet shielding.

### (3) Production of interlayer film (multi-layer interlayer film)

The resulting composition for a heat-shielding layer and the composition for an ultraviolet shielding layer were co-extruded using an extruder to provide an interlayer film having a laminated structure of three layers, an ultraviolet shielding layer/a heat-shielding layer/an ultraviolet shielding layer. The thicknesses of the ultraviolet-shielding layers of the resulting interlayer film each were 330 µm, the thickness of the heat-shielding layer was 100 µm, and the total thickness of the interlayer film was 760 µm.

### (4) Production of laminated glass

A laminated glass was obtained as in Reference Example 1, except that the resulting interlayer film (multi-layer interlayer film) was used.

### (Examples 9 to 15 and Comparative Examples 3 and 4)

An interlayer film (multi-layer interlayer film) was produced as in Example 8, except that the types and amounts of the tungsten oxide particles (heat-shielding particles), the antioxidant, and the ultraviolet shielding agent, in the first layer and the second layer, were set to those shown in Table 2. A laminated glass including an interlayer film was produced as in Example 8 using the resulting interlayer film. In Example 14, no antioxidant was used in the first layer. In Example 15, no ultraviolet shielding agent was used in the first layer. In Comparative Example 3, no tungsten oxide particles were used in the first layer. In Comparative Example 4, no ultraviolet shielding agent was used in the first layer and the second layer.

### (Reference Examples 16 to 24 and Comparative Examples 5 and 6)

A single-layer interlayer film was produced as in Reference Example 1, except that the types and amounts of the tungsten oxide particles (heat-shielding particles), the antioxidant, and the ultraviolet shielding agent were set to those shown in Table 3. A laminated glass including an interlayer film was produced as in Example 1 using the resulting interlayer film. In Reference Example 24, no antioxidant was used. In Comparative Examples 5 and 6, no ultraviolet shielding agent was used.

### (Examples 25 to 33 and Comparative Examples 7 and 8)

An interlayer film (multi-layer interlayer film) was produced as in Example 8, except that the types and amounts of the tungsten oxide particles (heat-shielding particles), the antioxidant, and the ultraviolet shielding agent, in the first layer and the second layer, were set to those shown in Table 4. A laminated glass including an interlayer film was produced as in Example 8 using the resulting interlayer film. In Example 31, no antioxidant was used in the first layer. In Comparative Examples 7 to 8, no ultraviolet shielding agent was used in the first layer and the second layer.

### (Reference Examples 34 to 45 and Comparative Example 9)

A single-layer interlayer film was produced as in Reference Example 1, except that the types and amounts of the tungsten oxide particles (heat-shielding particles), the antioxidant, and the ultraviolet shielding agent were set to those shown in Table 5. A laminated glass including an interlayer film was produced as in Reference Example 1 using the resulting interlayer film. In Comparative Example 9, no ultraviolet shielding agent was used. Comparative Examples 5 and 6 were also shown in Table 5.

### (Examples 46 to 57 and Comparative Example 10)

An interlayer film (multi-layer interlayer film) was produced as in Example 8, except that the types and amounts of the tungsten oxide particles (heat-shielding particles), the antioxidant, and the ultraviolet shielding agent, in the first layer and the second layer, were set to those shown in Table 6. A laminated glass including an interlayer film was produced as in Example 8 using the resulting interlayer film. In Comparative Example 10, no ultraviolet shielding agent was used in the first layer and the second layer. Comparative Examples 7 and 8 were also shown in Table 6.

### (Examples 58 to 63 and Comparative Examples 11 to 13)

An interlayer film (multi-layer interlayer film) was produced as in Example 8, except that the types of the thermoplastic resin and the plasticizer, in the first layer and the second layer, were set to those shown in Table 7, and the types and amounts of the tungsten oxide particles (heat-shielding particles), the antioxidant, and the ultraviolet shielding agent, in the first layer and the second layer, were set to those shown in Table 7. A laminated glass provided with an interlayer film was produced as in Example 8 using the resulting interlayer film. In Comparative Examples 11 to 13, no ultraviolet shielding agent was used in the first layer and the second layer.

### (Reference Examples 64 and 65 and Comparative Example 14)

A single-layer interlayer film was produced as in Reference Example 1, except that a near-infrared absorbing coloring matter was added in an amount shown in Table 8 in 100% by weight of the interlayer film to be obtained to provide a dispersion; a composition and a single-layer interlayer film were formed using the dispersion; and the types and amounts of the tungsten oxide particles (heat-shielding particles), the antioxidant, and the ultraviolet shielding agent were set to those shown in Table 8. A laminated glass provided with an interlayer film was produced as in Reference Example 1 using the resulting interlayer film. In Comparative Example 14, no ultraviolet shielding agent was used.

### (Examples 66 and 67 and Comparative Example 15)

A interlayer film (multi-layer interlayer film) was produced as in Example 8, except that a near-infrared absorbing coloring matter was added in an amount shown in Table 9 in 100% by weight of the interlayer film to be obtained to provide a dispersion; a composition for a heat-shielding layer and a multi-layer interlayer film were formed using the dispersion; and the types and amounts of the tungsten oxide particles (heat-shielding particles), the antioxidant, and the ultraviolet shielding agent, in the first layer and the second layer, were set to those shown in Table 9. A laminated glass including an interlayer film was produced as in Example 8 using the resulting interlayer film. In Comparative Example 15, no ultraviolet shielding agent was used in the first layer and the second layer.

### (Evaluation)

### (1) Production of laminated glass for evaluation

The resulting interlayer film was cut into a size of 30 cm in length × 30 cm in width. The resulting interlayer film was sandwiched between two transparent glass plates (30 cm in length × 30 cm in width × 2.5 mm in thickness). The product was retained in a vacuum laminator at 90°C for 30 minutes and then vacuum-pressed, so that a laminate was obtained. The portion of the interlayer film protruding out of the glass plates was cut off, whereby laminated glass was obtained.

### (2) Measurement of visible transmittance (Tv)

The visible transmittance of the resulting laminated glass at a wavelength of 380 to 780 nm was measured using a spectrophotometer ("U-4100" product of Hitachi High-Technologies Corporation) in accordance with JIS R 3211 (1998).

### (2) Measurement of solar transmittance (Ts2500)

The solar transmittance Ts (Ts2500) of the resulting laminated glass at a wavelength of 300 to 2500 nm was measured using a spectrophotometer ("U-4100" product of Hitachi High-Technologies Corporation) in accordance with JIS R 3106 (1998).

### (3) Measurement of light resistance

The laminated glass was irradiated with ultraviolet rays (quartz glass mercury lamp (750 W)) for 1000 hours in accordance with JIS R 3205 using an ultraviolet lamp ("HLG-2S" product of Suga Test Instruments Co., Ltd.). The Tv of the laminated glass after the 1000-hour irradiation was measured by the above method. The ΔTv (initial Tv - Tv after UV irradiation) was determined from the resulting measured value.

In the following Tables 1 to 9, the respective amounts of the tungsten oxide particles (heat-shielding particle), the antioxidant, the ultraviolet shielding agent, and the near-infrared absorbing coloring matter are an amount (% by weight) in 100% by weight of the first layer or the second layer.

The results of the evaluations of the interlayer films obtained in Examples 1 to 67 and Comparative Examples 1 to 15 show that the interlayer films obtained in Examples 1 to 67 have higher heat-shielding properties and a visible transmittance and better light resistance compared to the interlayer films obtained in Comparative Examples 1 to 15. Therefore, the high visible transmittance was retained for a long period of time.

**[Table 1]**

| | Structure of interlayer film | Amounts of heat-shielding particles and antioxidant Type and amount of ultraviolet shielding agent | | | | Evaluation | | |
|---|---|---|---|---|---|---|---|---|
| | | Heat-shielding particles | Antioxidant | Ultraviolet shielding agent | | Initial | | After UV irradiation |
| | | Amount % by weight | Amount % by weight | Type | Amount % by weight | Tv % | Ts2500 % | 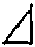 Tv |
| Ex. 1 | Single layer | 0.030 | 0.80 | Ultraviolet shielding agent 1 | 0.80 | 86 | 66 | ○ |
| Ex. 2 | Single layer | 0.045 | 0.80 | Ultraviolet shielding agent 1 | 0.80 | 85 | 61 | ○ |
| Ex. 3 | Single layer | 0.060 | 0.80 | Ultraviolet shielding agent 1 | 0.80 | 83 | 57 | ○ |
| Ex. 4 | Single layer | 0.100 | 0.80 | Ultraviolet shielding agent 1 | 0.80 | 80 | 48 | Δ |
| Ex. 5 | Sinple layer | 0.060 | 1.00 | Ultraviolet shielding agent 1 | 0.80 | 83 | 57 | ○ |
| Ex. 6 | Single layer | 0.100 | 1.00 | Ultraviolet shielding agent 1 | 0.80 | 80 | 48 | Δ |
| Ex. 7 | Single layer | 0.030 | - | Ultraviolet shielding agent 1 | 0.80 | 86 | 66 | ○ |
| Comp.Ex.1 | Single layer | - | 0.80 | Ultraviolet shielding agent 1 | 0.80 | 89 | 78 | - |
| Comp.Ex.2 | Single layer | 0.030 | 0.80 | - | - | 81 | 49 | - |

| | | | | | | | | |
|---|---|---|---|---|---|---|---|---|
| Table 1 shows the results of the ΔTv determined by the following criteria. Δ: An absolute value of ΔTv is small compared to that of Comparative Example 2. ○: An absolute value of ΔTv is small compared to that of Comparative Example 2, and smaller than that evaluated as Δ. ○○: An absolute value of ΔTv is small compared to that of Comparative Example 2, and smaller than that evaluated as ○ (extremely small). | | | | | | | | |

**[Table 2]**

| | Structure of interlayer film | First layer | | | | Second and third layers | | Evaluation | | |
|---|---|---|---|---|---|---|---|---|---|---|
| | | Amounts of heat-shielding particles and antioxidant Type and amount of ultraviolet shielding agent | | | | Type and amount of ultraviolet shielding agent | | | | |
| | | Heat-shielding particles | Antioxidant. | Ultraviolet shielding agent | | | | Initial | | After UV irradiation |
| | | Amount % by weight | Amount % by weight | Type | Amount % by weight | Type | Amount % by weight | Tv % | Ts2500 % | 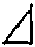 Tv |
| Ex. 8 | Three layers | 0.030 | 0.80 | Ultraviolet shielding agent 1 | 0.80 | Ultraviolet shielding agent 1 | 0.80 | 86 | 66 | ○○ |
| Ex. 9 | Three layers | 0.045 | 0.80 | Ultraviolet shielding agent 1 | 0.80 | Ultraviolet shielding agent 1 | 0.80 | 85 | 61 | ○○ |
| Ex. 10 | Three layers | 0.060 | 0.80 | Ultraviolet shielding agent 1 | 0.80 | Ultraviolet shielding agent 1 | 0.80 | 83 | 57 | ○○ |
| Ex. 11 | Three layers | 0.100 | 0.80 | Ultraviolet shielding agent 1 | 0.80 | Ultraviolet shielding agent 1 | 0.80 | 80 | 48 | ○ |
| Ex. 12 | Three layers | 0.060 | 1.00 | Ultraviolet shielding aqent 1 | 0.80 | Ultraviolet shielding agent 1 | 0.80 | 83 | 57 | ○○ |
| Ex. 13 | Three layers | 0.100 | 1.00 | Ultraviolet shielding agent 1 | 0.80 | Ultraviolet shielding agent 1 | 0.80 | 80 | 48 | ○ |
| Ex. 14 | Three layers | 0.030 | - | Ultraviolet shielding agent 1 | 0.80 | Ultraviolet shielding agent 1 | 0.80 | 86 | 56 | ○○ |
| Ex. 15 | Three layers | 0.030 | 0.80 | Ultraviolet shielding agent 1 | - | Ultraviolet shielding agent 1 | 0.80 | 86 | 66 | ○○ |
| Comp.Ex.3 | Three layers | - | 0.80 | Ultraviolet shielding agent 1 | 0.80 | Ultraviolet shielding agent 1 | 0.80 | 89 | 78 | - |
| Com.Ex.4 | Three layers | 0.030 | 0.80 | - | - | - | - | 81 | 49 | - |

| | | | | | | | | | | |
|---|---|---|---|---|---|---|---|---|---|---|
| Table 2 shows the results of the ΔTv determined by the following criteria. Δ: An absolute value of ΔTv is small compared to that of Comparative Example 4. ○: An absolute value of ΔTv is small compared to that of Comparative Example 4, and smaller than that evaluated as Δ. ○○: An absolute value of ΔTv is small compared to that of Comparative Example 4, and smaller than that evaluated as ○ (extremely small). | | | | | | | | | | |

**[Table 3]**

| | Structure of interlayer film | Amounts of heat-shielding particles and antioxidant Type and amount of ultraviolet shielding agent | | | | Evaluation | | |
|---|---|---|---|---|---|---|---|---|
| | | Heal-shielding particles | Antioxidant | Ultraviolet shielding agent | | Initial | | After UV irradiation |
| | | Amount % by weight | Amount % by weight | Type | Amount % by weight | Tv % | Ts2500 % | 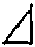 Tv |
| Ex. 16 | Single layer | 0.030 | 0.20 | Ultraviolet shielding agent 1 | 0.80 | 86 | 66 | ○ |
| Ex. 17 | Single layer | 0.045 | 0.20 | Ultraviolet shielding agent 1 | 0.80 | 85 | 61 | ○ |
| Ex. 18 | Single layer | 0.060 | 0.20 | Ultraviolet shielding agent 1 | 0.80 | 83 | 57 | ○ |
| Ex. 19 | Single layer | 0.100 | 0.20 | Ultraviolet shielding agent 1 | 0.80 | 80 | 48 | Δ |
| Ex. 20 | Single layer | 0.100 | 0.20 | Ultraviolet shielding agent 1 | 0.20 | 80 | 48 | Δ |
| Ex. 21 | Single layer | 0.100 | 0.20 | Ultraviolet shielding agent 1 | 0.40 | 80 | 48 | Δ |
| Ex. 22 | Single layer | 0.060 | 040 | Ultraviolet shielding agent 1 | 0.80 | 83 | 57 | ○ |
| Ex. 23 | Single layer | 0.100 | 0.40 | Ultraviolet shielding agent 1 | 0.80 | 80 | 48 | Δ |
| Ex. 24 | Single layer | 0.030 | - | Ultraviolet shielding agent 1 | 0.80 | 86 | 66 | ○ |
| Comp.Ex.5 | Single layer | 0.100 | 0.20 | - | - | 81 | 49 | - |
| Comp.Ex.6 | Single layer | 0.100 | 0.40 | - | - | 81 | 49 | - |

| | | | | | | | | |
|---|---|---|---|---|---|---|---|---|
| Table 3 shows the results of the ΔTv determined by the following criteria. Δ: An absolute value of ΔTv is small compared to those of Comparative Example 5 and Comparative Example 6. ○: An absolute value of ΔTv is small compared to those of Comparative Example 5 and Comparative Example 6, and smaller than those evaluated as Δ. ○○: An absolute value of ΔTv is small compared to those of Comparative Example 5 and Comparative Example 6, and smaller than those evaluated as o (extremely small). | | | | | | | | |

**[Table 4]**

| | Structure of interlayer film | First layer | | | | Second and third layers | | Evaluation | | |
|---|---|---|---|---|---|---|---|---|---|---|
| | | Amounts of heat-shielding particles and antioxidant Type and amount of ultraviolet shielding agent | | | | Type and amount of ultraviolet shielding agent | | | | |
| | | Heat-shielding particles | Antioxidant | Ultraviolet shielding agent | | | | Initial | | After UV irradiation |
| | | Amount % by weight | Amount % by weight | Type | Amount % by weight | Type | Amount % by weight | Tv % | Ts2500 % | 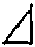 Tv |
| Ex. 25 | Three layers | 0.030 | 0.20 | Ultraviolet shielding agent 1 | 0.80 | Ultraviolet shielding agent 1 | 0.80 | 86 | 66 | ○○ |
| Ex. 26 | Three layers | 0.045 | 0.20 | Ultraviolet shielding agent 1 | 0.80 | Ultraviolet shielding agent 1 | 0.80 | 85 | 61 | ○○ |
| Ex. 27 | Three layers | 0.060 | 0.20 | Ultraviolet shielding agent 1 | 0.80 | Ultraviolet shielding agent 1 | 0.80 | 83 | 57 | ○○ |
| Ex. 28 | Three layers | 0.100 | 0.20 | Ultraviolet shielding agent 1 | 0.80 | Ultraviolet shielding agent 1 | 0.80 | 80 | 48 | ○ |
| Ex. 29 | Three layers | 0.060 | 0.40 | Ultraviolet shielding agent 1 | 0.80 | Ultraviolet shielding agent 1 | 0.80 | 83 | 57 | ○○ |
| Ex. 30 | Three layers | 0.100 | 0.40 | Ultraviolet shielding agent 1 | 0.80 | Ultraviolet shielding agent 1 | 0.80 | 80 | 48 | ○ |
| Ex. 31 | Three layers | 0.030 | - | Ultraviolet shielding agent 1 | 0.80 | Ultraviolet shielding agent 1 | 0.20 | 86 | 66 | ○○ |
| Ex. 32 | Three layers | 0.100 | 0.20 | Ultraviolet shielding agent 1 | 0.80 | Ultraviolet shielding agent 1 | 0.40 | 80 | 48 | ○ |
| Ex. 33 | Three layers | 0.100 | 0.20 | Ultraviolet shielding agent 1 | 0.20 | Ultraviolet shielding agent 1 | 0.20 | 80 | 48 | ○ |
| Comp.Ex.7 | Three layers | 0.100 | 0.20 | - | - | - | - | 81 | 49 | - |
| Comp.Ex.8 | Three layers | 0.100 | 0.40 | - | - | - | - | 81 | 49 | - |

| | | | | | | | | | | |
|---|---|---|---|---|---|---|---|---|---|---|
| Table 4 shows the results of the ΔTv determined by the following criteria. Δ: An absolute value of ΔTv is small compared to those of Comparative Example 7 and Comparative Example 8. ○: An absolute value of ΔTv is small compared to those of Comparative Example 7 and Comparative Example 8, and smaller than that evaluated as Δ. ○○: An absolute value of ΔTv is small compared to those of Comparative Example 7 and Comparative Example 8, and smaller than that evaluated as o (extremely small). | | | | | | | | | | |

**[Table 5]**

| | Structure of interlayer film | Amounts of heat-shielding particles and antioxidant Type and amount of ultraviolet shielding agent | | | | Evaluation | | |
|---|---|---|---|---|---|---|---|---|
| | | Heat-shielding particles | Antioxidant | Ultraviolet shielding agent | | Initial | | After UV irradiation |
| | | Amount % by weight | Amount % by weight | Type | Amount % by weight | Tv % | Ts2500 % | 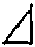 Tv |
| Ex. 34 | Single layer | 0.100 | 0.20 | Ultraviolet shielding agent 2 | 0.80 | 80 | 48 | Δ |
| Ex. 35 | Single layer | 0.100 | 0.40 | Ultraviolet shielding agent 2 | 0.80 | 80 | 48 | Δ |
| Ex. 36 | Single layer | 0.100 | 0.80 | Ultraviolet shielding agent 2 | 0.80 | 80 | 48 | Δ |
| Ex. 37 | Single layer | 0.100 | 0.20 | Ultraviolet shielding agent 3 | 0.80 | 81 | 49 | Δ |
| Ex. 38 | Single layer | 0.100 | 0.40 | Ultraviolet shielding agent 3 | 0.80 | 81 | 49 | Δ |
| Ex. 39 | Single layer | 0.100 | 0.80 | Ultraviolet shielding agent 3 | 0.80 | 81 | 49 | Δ |
| Ex. 40 | Single layer | 0.100 | 0.20 | Ultraviolet shielding agent 4 | 0.80 | 81 | 49 | Δ |
| Ex. 41 | Single layer | 0.100 | 0.40 | Ultraviolet shielding agent 4 | 0.80 | 81 | 49 | Δ |
| Ex. 42 | Single layer | 0.100 | 0.80 | Ultraviolet shielding agent 4 | 0.80 | 81 | 49 | Δ |
| Ex. 43 | Single layer | 0.100 | 0.20 | Ultraviolet shielding agent 5 | 0.80 | 80 | 48 | Δ |
| Ex. 44 | Single layer | 0.100 | 0.40 | Ultraviolet shielding agent 5 | 0.80 | 80 | 48 | Δ |
| Ex. 45 | Single layer | 0.100 | 0.80 | Ultraviolet shielding agent 5 | 0.80 | 80 | 48 | Δ |
| Comp.Ex.5 | Single layer | 0.100 | 0.20 | - | - | 81 | 49 | - |
| Comp.Ex.6 | Single layer | 0.100 | 0.40 | - | - | 81 | 49 | - |
| Comp.Ex.9 | Single layer | 0.100 | 0.80 | - | - | 81 | 49 | - |

| | | | | | | | | |
|---|---|---|---|---|---|---|---|---|
| Table 5 shows the results of the ΔTv determined by the following criteria. Δ: An absolute value of ΔTv is small compared to those of Comparative Example 5, Comparative Example6, and Comparative Example 9. ○: An absolute value of ΔTv is small compared to those of Comparative Example 5, Comparative Example6, and Comparative Example 9, and smaller than that evaluated as Δ. ○○: An absolute value of ΔTv is small compared to those of Comparative Example 5, Comparative Example6, and Comparative Example 9, and smaller than that evaluated as ○ (extremely small). | | | | | | | | |

**[Table 6]**

| | Structure of interlayer film | First layer | | | | Second and third layers | | Evaluation | | |
|---|---|---|---|---|---|---|---|---|---|---|
| | | Amounts of heat-shielding particles and antioxidant Type and amount of ultraviolet shielding agent | | | | Type and amount of ultraviolet shielding agent | | | | |
| | | Heat-shielding particles | Antioxidant | Ultraviolet shielding agent | | | | Initial | | After UV irradiation |
| | | Amount % by weight | Amount % by weight | Type | Amount % by weight | Type | Amount % by weight | Tv % | Ts2500 % | 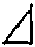 Tv |
| Ex. 46 | Three layers | 0.100 | 0.20 | Ultraviolet shielding agent 2 | 0.80 | Ultraviolet shielding agent 2 | 0.80 | 80 | 48 | ○ |
| Ex. 47 | Three layers | 0.100 | 0.40 | Ultraviolet shielding agent 2 | 0.80 | Ultraviolet shielding agent 2 | 0.80 | 80 | 48 | ○ |
| Ex. 48 | Three layers | 0.100 | 0.80 | Ultraviolet shielding agent 2 | 0.80 | Ultraviolet shielding agent 2 | 0.80 | 80 | 48 | ○ |
| Ex. 49 | Three layers | 0.100 | 0.20 | Ultraviolet shielding agent 3 | 0.40 | Ultraviolet shielding agent 3 | 0.40 | 81 | 49 | ○ |
| Ex. 50 | Three layers | 0.100 | 0.40 | Ultraviolet shielding agent 3 | 0.40 | Ultraviolet shielding agent 3 | 0.40 | 81 | 49 | ○ |
| Ex. 51 | Three layers | 0.100 | 0.80 | Ultraviolet shielding agent 3 | 0.40 | Ultraviolet shielding agent 3 | 0.40 | 81 | 49 | ○ |
| Ex. 52 | Three layers | 0.100 | 0.20 | Ultraviolet shielding agent 4 | 0.40 | Ultraviolet shielding agent 4 | 0.40 | 81 | 49 | ○ |
| Ex. 53 | Three layers | 0.100 | 0.40 | Ultraviolet shielding agent 4 | 0.40 | Ultraviolet shielding agent 4 | 0.40 | 81 | 49 | ○ |
| Ex. 54 | Three layers | 0.100 | 0.80 | Ultraviolet shielding agent 4 | 0.40 | Ultraviolet shielding agent 4 | 0.40 | 81 | 49 | ○ |
| Ex. 55 | Three layers | 0.100 | 0.20 | Ultraviolet shielding agent 5 | 0.20 | Ultraviolet shielding agent 5 | 0.20 | 80 | 48 | ○ |
| Ex. 56 | Three layers | 0.100 | 0.40 | Ultraviolet shielding agent 5 | 0.20 | Ultraviolet shielding agent 5 | 0.20 | 80 | 48 | ○ |
| Ex. 57 | Three layers | 0.100 | 0.80 | Ultraviolet shielding agent 5 | 0.20 | Ultraviolet shielding agent 5 | 0.20 | 80 | 48 | ○ |
| Comp. Ex.7 | Three layers | 0.100 | 0.20 | - | - | - | - | 81 | 49 | - |
| Comp.Ex.8 | Three layers | 0.100 | 0.40 | - | - | - | - | 81 | 49 | - |
| Comp.Ex.10 | Three layers | 0.100 | 0.80 | - | - | - | - | 81 | 49 | - |

| | | | | | | | | | | |
|---|---|---|---|---|---|---|---|---|---|---|
| Table 6 shows the results of the ΔTv determined by the following criteria. Δ: An absolute value of ΔTv is small compared to those of Comparative Example 7, Comparative Example 8, and Comparative Example 10. ○: An absolute value of ΔTv is small compared to those of Comparative Example 7, Comparative Example 8, and Comparative Example 10, and smaller than that evaluated as Δ. ○○: An absolute value of ΔTv is small compared to those of Comparative Example 7, Comparative Example 8, and Comparative Example 10, and smaller than that evaluated as ○ (extremely small). | | | | | | | | | | |

**[Table 7]**

| | Structure of interlayer film | First layer | | | | | | Second and third layers | | | |
|---|---|---|---|---|---|---|---|---|---|---|---|
| | | Type of resin | Type of plasticizer | Amounts of heat-shielding particles and antioxidant Type and amount of ultraviolet shielding agent | | | | Type of resin | Type of plasticizer | Type and amount of ultraviolet shielding agent | |
| | | | | Heat-shielding particles | Antioxidant | Ultraviolet shielding agent | | | | | |
| | | Type | Type | Amount % by weight | Amount % by weight | Type | Amount % by weight | Type | Type | Type | Amount % by weight |
| Ex. 58 | Three layers | PVB3 | Plasticizer 1 | 0.100 | 0.20 | Ultraviolet shielding agent 1 | 0.80 | PVB1 | Plasticizer 1 | Ultraviolet shielding agent 1 | 0.80 |
| Ex. 59 | Three layers | PVB3 | Plasticizer 1 | 0.100 | 0.20 | Ultraviolet shielding agent 1 | 0.20 | PVB1 | Plasticizer 1 | Ultraviolet shielding agent 1 | 0.20 |
| Comp.Ex.11 | Three layers | PVB3 | Plasticizer 1 | 0.100 | 0.20 | - | - | PVB1 | Plasticizer 1 | - | - |
| | | | | | | | | | | | |
| Ex. 60 | Three layers | PVB3 | Plasticizer 2 | 0.100 | 0.20 | Ultraviolet shielding agent 1 | 0.80 | PVB1 | Plasticizer 2 | Ultraviolet shielding agent 1 | 0.80 |
| Ex. 61 | Three layers | PVB3 | Plasticizer 2 | 0.100 | 0.20 | Ultraviolet shielding agent 1 | 0.20 | PVB1 | Plasticizer 2 | Ultraviolet shielding agent 1 | 0.20 |
| Comp.Ex.12 | Three layers | PVB3 | Plasticizer 2 | 0.100 | 0.20 | - | - | PVB1 | Plasticizer 2 | - | - |
| | | | | | | | | | | | |
| Ex. 62 | Three layers | PVB2 | Plasticizer 1 | 0.100 | 0.20 | Ultraviolet shielding agent 1 | 0.80 | PVB3 | Plasticizer 1 | Ultraviolet shielding agent 1 | 0.80 |
| Ex. 63 | Three layers | PVB2 | Plasticizer 1 | 0.100 | 0.20 | Ultraviolet shielding agent 1 | 0.20 | PVB3 | Plasticizer 1 | Ultraviolet shielding agent 1 | 0.20 |
| Comp.Ex.13 | Three layers | PVB2 | Plasticizer 1 | 0.100 | 0.20 | | | PVB3 | Plasticizer 1 | | |
| | | | | | | | | | | | |

| | Evaluation | | | | | | | | | | |
|---|---|---|---|---|---|---|---|---|---|---|---|
| | Initial | | After UV irradiation | After UV irradiation | | | | | | | |
| | Tv % | Ts2500 % | ΔTv | | | | | | | | |
| Ex. 58 | 80 | 48 | ○ | | | | | | | | |
| Ex. 59 | 80 | 48 | ○ | | | | | | | | |
| Comp.Ex.11 | 80 | 48 | - | | | | | | | | |
| | | | | | | | | | | | |
| Ex. 60 | 80 | 48 | ○ | | | | | | | | |
| Ex. 61 | 80 | 48 | ○ | | | | | | | | |
| Comp.Ex.12 | 80 | 48 | - | | | | | | | | |
| | | | | | | | | | | | |
| Ex. 62 | 80 | 48 | ○ | | | | | | | | |
| Ex. 63 | 80 | 48 | ○ | | | | | | | | |
| Comp.Ex.13 | 81 | 49 | - | | | | | | | | |

| | | | | | | | | | | | |
|---|---|---|---|---|---|---|---|---|---|---|---|
| Table 7 shows the results of the ΔTv determined by the following criteria. Δ: An absolute value of ΔTv is small compared to that of Comparative Example 11 (in the case of Examples 58 and 59), Comparative Example 12 (in the case of Examples 60 and 61), or Comparative Example 13 (in the case of Examples 62 and 63). ○: An absolute value of ΔTv is small compared to that of Comparative Example 11 (in the case of Examples 58 and 59), Comparative Example 12 (in the case of Examples 60 and 61), or Comparative Example 13 (in the case of Examples 62 and 63), and smaller than that evaluated as Δ. ○○: An absolute value of ΔTv is small compared to that of Comparative Example 11 (in the case of Examples 58 and 59), Comparative Example 12 (in the case of Examples 60 and 61), or Comparative Example 13 (in the case of Examples 62 and 63), and smaller than that evaluated as ○ (extremely small). | | | | | | | | | | | |

**[Table 8]**

| | Structure of interlayer film | Amounts of heat-shielding particles and antioxidant Type and amount of ultraviolet shielding agent | | | | | Evaluation | | |
|---|---|---|---|---|---|---|---|---|---|
| | | Heat-shielding particles | Near-infrared absorbing coloring matter | Antioxidant | Ultraviolet shielding agent | | Initial | | After UV irradiation |
| | | Amount % by weight | Amount % by weight | Amount % by weight | Type | Amount % by weight | Tv % | Ts2500 % | 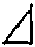 Tv |
| Ex. 64 | Single layer | 0,060 | 0.006 | 0.80 | Ultraviolet shielding agent 1 | 0.80 | 83 | 49 | Δ |
| Ex. 65 | Single layer | 0.060 | 0.006 | 0.20 | Ultraviolet shielding agent 1 | 0.20 | 83 | 49 | Δ |
| Comp.Ex. 14 | Single layer | 0.060 | 0.006 | 0.20 | - | - | 84 | 60 | - |

| | | | | | | | | | |
|---|---|---|---|---|---|---|---|---|---|
| Table 8 shows the results of the ΔTv determined by the following criteria. Δ: An absolute value of ΔTv is small compared to that of Comparative Example 14. ○: An absolute value of ΔTv is small compared to that of Comparative Example 14, and smaller than that evaluated as Δ. ○○: An absolute value of ΔTv is small compared to that of Comparative Example 14, and smaller than that evaluated as o (extremely small). | | | | | | | | | |

**[Table 9]**

| | ' Structure of interlayer film | First layer | | | | | Second and third layers | | Evaluation | | |
|---|---|---|---|---|---|---|---|---|---|---|---|
| | | Amounts of heat-shielding particles and antioxidant Type and amount of ultraviolet shielding agent | | | | | Type and amount of ultraviolet shielding agent | | | | |
| | | Heal-shielding particles | Near-infrared absorbing coloring matter | Antioxidant | Ultraviolet shielding agent | | | | Initial | | After UV irradiation |
| | | Amount % by weight | Amount % by weight | Amount % by weight | Type | Amount % by weight | Type | Amount % by weight | Tv % | Ts2500 % | 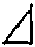 Tv |
| Ex. 66 | Three layers | 0.060 | 0.006 | 0.20 | Ultraviolet shielding agent 1 | 0.80 | Ultraviolet shielding agent 1 | 0.80 | 83 | 49 | ○○ |
| Ex. 67 | Three layers | 0.060 | 0.006 | 0.20 | Ultraviolet shielding agent 1 | 0.20 | Ultraviolet shielding agent 1 | 0.20 | 83 | 49 | ○○ |
| Comp.Ex.15 | Three layers | 0.060 | 0.006 | 0.20 | - | - | - | - | 85 | 51 | - |

| | | | | | | | | | | | |
|---|---|---|---|---|---|---|---|---|---|---|---|
| Table 9 shows the results of the ΔTv determined by the following criteria. Δ: An absolute value of ΔTv is small compared to that of Comparative Example 15. ○: An absolute value of ΔTv is small compared to that of Comparative Example 15, and smaller than that evaluated as Δ. ○○: An absolute value of ΔTv is small compared to that of Comparative Example 15, and smaller than that evaluated as o (extremely small). | | | | | | | | | | | |

### EXPLANATION OF SYMBOLS

- 1:: Interlayer film
- 1a:: First surface
- 1b:: Second surface
- 2:: First layer
- 2a:: First surface
- 2b:: Second surface
- 3:: Second layer
- 3a:: Outer surface
- 4:: Third layer
- 4a:: Outer surface
- 11:: Laminated glass
- 21:: First component for laminated glass
- 22:: Second component for laminated glass
- 31:: Interlayer film

## Claims

1. An interlayer film for laminated glass having a laminated structure of two or more layers, comprising:
a first layer that contains a polyvinyl acetal resin as a thermoplastic resin, a plasticizer and tungsten oxide particles, and
a second layer that contains a polyvinyl acetal resin as a thermoplastic resin, a plasticizer, an ultraviolet shielding agent and that is disposed on a first surface side of the first layer;
wherein the amount of the tungsten oxide particles in 100% by weight of the first layer is 3% by weight or less,
the amount of the ultraviolet shielding agent in 100% by weight of the second layer is 0.2% by weight or more and
the ultraviolet shielding agent is a benzotriazol ultraviolet shielding agent, a benzophenone ultraviolet shielding agent, a triazine ultraviolet shielding agent, a benzoate ultraviolet shielding agent, a malonic ester ultraviolet shielding agent, or an oxalic anilide ultraviolet shielding agent.

2. The interlayer film for laminated glass according to claim 1,
wherein the ratio of the thickness of the second layer to the total thickness of the interlayer film is 0.1 or more and 0.9 or less.

3. The interlayer film for laminated glass according to claim 1 or 2,
wherein the tungsten oxide particles are cesium-doped tungsten oxide particles.

4. The interlayer film for laminated glass according to any one of claims 1 to 3,
wherein the ultraviolet shielding agent is a benzotriazol ultraviolet shielding agent or a benzophenone ultraviolet shielding agent.

5. Laminated glass comprising:
a first component for laminated glass;
a second component for laminated glass; and
an interlayer film sandwiched between the first component for laminated glass and the second component for laminated glass,
wherein the interlayer film is the interlayer film for laminated glass according to any one of claims 1 to 4.

## Patentansprüche

1. Zwischenschichtfolie für Verbundglas mit einer laminierten Struktur aus zwei oder mehr Schichten, umfassend:
eine erste Schicht, die ein Polyvinylacetalharz als ein thermoplastisches Harz, einen Weichmacher und Wolframoxidteilchen enthält, und
eine zweite, Schicht die ein Polyvinylacetalharz als ein thermoplastisches Harz, einen Weichmacher, ein Ultraviolett-Abschirmungsmittel enthält, und die auf einer ersten Oberflächenseite der ersten Schicht angeordnet ist;
wobei die Menge der Wolframoxidteilchen in 100 Gew-% der ersten Schicht 3 Gew-% oder weniger beträgt, die Menge des Ultraviolett-Abschirmungsmittel in 100 Gew-% der zweiten Schicht 0,2 Gew-% oder mehr beträgt, und das Ultraviolett-Abschirmungsmittel ein Benzotriazol-Ultraviolett-Abschirmungsmittel, ein Benzophenon-Ultraviolett-Abschirmungsmittel, ein Triazin-Ultraviolett-Abschirmungsmittel, ein Benzoat-Ultraviolett-Abschirmungsmittel, ein Malonsäureester-Ultraviolett-Abschirmungsmittel oder ein Oxalsäureanilid-Ultraviolett-Abschirmungsmittel ist.

2. Zwischenschichtfolie für Verbundglas nach Anspruch 1, wobei das Verhältnis der Dicke der zweiten Schicht zur der Gesamtdicke der Zwischenschichtfolie 0,1 oder mehr und 0,9 oder weniger beträgt.

3. Zwischenschichtfolie für Verbundglas nach Anspruch 1 oder 2, wobei die Wolframoxidteilchen Cäsium-dotierte Wolframoxidteilchen sind.

4. Zwischenschichtfolie für Verbundglas nach irgendeinem der Ansprüche 1 bis 3, wobei das Ultraviolett-Abschirmungsmittel ein Benzotriazol-Ultraviolett-Abschirmungsmittel oder ein Benzophenon-Ultraviolett-Abschirmungsmittel ist.

5. Verbundglas, umfassend:
eine erste Komponente für Verbundglas;
eine zweite Komponente für Verbundglas;
eine Zwischenschichtfolie, die zwischen der ersten Komponente für Verbundglas und der zweiten Komponente für Verbundglas angeordnet ist,
wobei die Zwischenschichtfolie die Zwischenschichtfolie für Verbundglas nach irgendeinem der Ansprüche 1 bis 4 ist.

## Revendications

1. Un film intercouche pour verre feuilleté ayant une structure stratifiée de deux couches ou plus, comprenant:
une première couche qui contient une résine de polyvinylacétal en tant que résine thermoplastique, un plastifiant et des particules d'oxyde de tungstène, et
une seconde couche qui contient une résine de polyvinylacétal en tant que résine thermoplastique, un plastifiant et un agent de protection contre les rayons ultraviolets et qui est disposée sur un premier côté de la surface de la première couche ;
dans lequel la quantité des particules d'oxyde de tungstène dans 100% en poids de la première couche est 3% en poids ou moins,
la quantité de l'agent de protection contre les rayons ultraviolets dans 100% en poids de la première couche est 0,2% en poids ou plus, et
l'agent de protection contre les rayons ultraviolets est un agent de protection contre les rayons ultraviolets à benzotriazole, un agent de protection contre les rayons ultraviolets à benzophénone, un agent de protection contre les rayons ultraviolets à triazine, un agent de protection contre les rayons ultraviolets à benzoate, un agent de protection contre les rayons ultraviolets à ester malonique, ou un agent de protection contre les rayons ultraviolets à anilide oxalique.

2. Le film intercouche pour verre feuilleté selon la revendication 1,
dans lequel le rapport de l'épaisseur de la seconde couche à l'épaisseur totale du film intercouche est 0,1 ou plus et 0,9 ou moins.

3. Le film intercouche pour verre feuilleté selon la revendication 1 ou 2,
dans lequel les particules d'oxyde de tungstène sont des particules d'oxyde de tungstène dopés de césium.

4. Le film intercouche pour verre feuilleté selon l'une quelconque des revendications 1 à 3,
dans lequel l'agent de protection contre les ultraviolets est un agent de protection contre les rayons ultraviolets à benzotriazole ou un agent de protection contre les rayons ultraviolets à benzophénone.

5. Verre feuilleté comprenant:
un premier composant pour verre feuilleté;
un second composant pour verre feuilleté; et
un film intercouche pris en sandwich entre le premier composant pour verre feuilleté et le deuxième composant pour verre feuilleté,
le film intercouche étant le film intercouche pour verre feuilleté selon l'une quelconque des revendications 1 à 4.
